# EUROPEAN PATENT SPECIFICATION

(11) **EP 0 869 662 B1**
(45) Date of publication and mention of the grant of the patent: **18.09.2002**
(21) Application number: 98111727.8
(22) Date of filing: 25.02.1993
(51) Int. Cl.: H04N 1/403

(54) **Image binarization system**
Bildbinarisierungssystem
Système de conversion binaire d'image

(30) Priority: 25.02.1992 JP 3783592; 13.05.1992 JP 12082692
(43) Date of publication of application: 07.10.1998
(62) Divisional of application: 93904352.7
(73) Proprietor: PFU LIMITED, Kahoku-gun Ishikawa 929-1192 (JP); FUJITSU LIMITED, Kawasaki-shi, Kanagawa 211-8588 (JP)
(72) Inventor: Kaji, Yukio, Kanazawa-shi, Ishikawa 920-01 (JP); Nakajima, Toshiki, Hakui-gun, Ishikawa 929-14 (JP)
(74) Representative: Stebbing, Timothy Charles

(56) References cited:
- EP-A- 0 070 161
- US-A- 4 709 274
- US-A- 5 065 257

## Description

The present invention relates to an image scanner for reading characters and images recorded on an original, and particularly, to a binarization system for an image scanner, for discriminating between white and black parts in read data.

An image scanner raster-scans characters and images recorded on an original and converts the scanned data into electric signals to be read.

The image scanner successively traces the gray levels of the ground color of the original, prepares a required white level according to the gray levels, and generates an analog white level signal representing the white level. The image scanner scans the original, provides analog image signals representing the scanned original, determines the gray level (between 0 and 1) of each of the analog image signals according to the analog white level signal serving as a white level of 1, and provides digital image signals representing the gray levels. The gray levels represented with the digital image signals are examined to determine whether or not the original contains recorded images as well as the concentration of the images.

The characters and images recorded on the original and read by the image scanner may be read into a computer. In this case, the gray levels of pixels read by CCD sensors of the image scanner are compared with a predetermined slice level, to binarize the read data into white and black parts. For this binarization, it is important to optimize the slice level to be compared with gray levels.

An embodiment of the present invention may provide a binarization system for an image scanner, which correctly reads characters and images recorded on an original even if the original involves a wide or narrow range of gray levels without causing unwanted black dots, is capable of reading characters having sizes out of a predetermined range, and provides binary data according to the read data.

EP-A-0 070 161 discloses a binarization system according to the preamble of accompanying claim 1. In this system, a plurality of one pixel delay buffers define a block of pixels. Minimum and maximum pixel level detection circuits detect the minimum and maximum gray levels in the block of pixels, and the outputs of the minimum and maximum pixel level detection circuits are fed to a subtractor, to produce a difference signal which is compared with a preset value representing a minimum rate of change in background level.

According to the present invention, there is provided a binarization system for an image scanner which raster scans an original for reading characters and images recorded on the original, said binarization system comparing the gray levels of the read data with a predetermined slice level to provide binary data, and comprising: block defining means for providing the gray levels of a plurality of pixels in a block; difference calculation means for calculating differences between gray levels of pixels in each block; edge detecting means for detecting edges in the gray levels according to data provided by the difference calculation means; slice level decision means for determining a binarization slice level for the read image data of each of the blocks, according to the gray levels from the dividing means and the edges detected by the edge detecting means; and correction means for correcting the slice level; characterised in that: said block defining means is a dividing means for dividing the read data into predetermined unit blocks; and said difference calculation means is a rate-of-change calculation means for calculating rates of changes in the gray levels of pixels in each block by considering each pixel in turn as an objective pixel and calculating the absolute sum of the gray levels of one or more pixels before the objective pixel multiplied by a first coefficient and of the gray levels of one or more pixels after the objective pixel multiplied by a second coefficient, said absolute sum constituting said data provided by said difference calculation means;
whereby the binarization system achieves optimum binarization and enables the image scanner to correctly read the original without causing unwanted black dots even if the original involves a wide or narrow range of gray levels, as well as reading characters that are out of predetermined size ranges.

If a given block of read image data involves a narrow range of gray levels, the binarization system employs a slice level for the preceding block as a slice level for the given block.

The slice level decision unit may determine a slice level for a given block according to the average of a maximum and minimum of gray levels provided by the edge detector for the given block.

The correction unit may correct the slice level determined by the slice level decision unit by calculating the weighted sum of the determined slice level and a slice level for a corresponding block in the preceding raster.

Reference will now be made, by way of example, to the accompanying drawings in which:
Fig. **1** is a schematic view showing essential parts of a binarization system according to the present invention;
Fig. **2** is a schematic view showing a binarization system according to an embodiment of the present invention;
Figs. **3** (a), **3** (b), and **3** (c) are timing charts showing data in the system of Fig. **2**;
Fig. **4** explains operations of the system of Fig. **2** ;
Fig. **5** shows the details of a gradient filtering unit, slice level decision circuit, and weighted mean calculator; and
Fig. **6** is a schematic view showing essential parts of a binarization system according to a prior art.

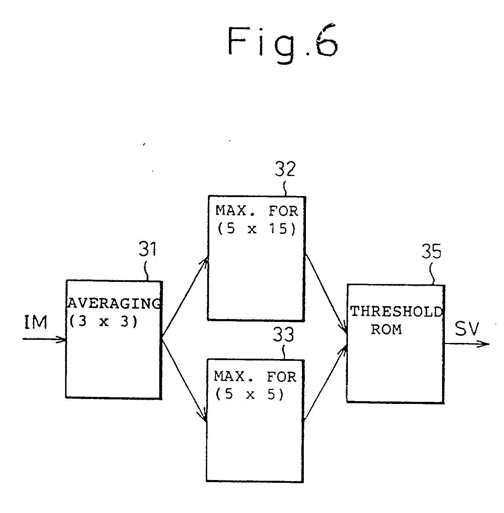

Next, a binarization system according to an embodiment of the present invention will be explained. Before explaining the embodiment, a binarization system according to a prior art and the problems thereof will be explained with reference to Fig. **6** .

Figure **6** shows a slice level determining process according to the prior art for an image scanner. In the figure, a reference mark IM is original digital image data, 31 is an averaging unit, 32 is a first maximum detector, 33 is a second maximum detector, 34 is a threshold ROM, and SV is a slice level output.

The original data IM is formed by converting the gray levels of read pixels into digital signals by an analog-to-digital converter.

The averaging unit 31 averages the gray levels of each matrix of 3x3 pixels of the original data. The gray level average is supplied to the first and second maximum detectors 32 and 33.

The first maximum detector 32 detects a maximum among the averaged 5x5 pixels. The second maximum detector detects a maximum among the averaged 5x15 pixels.

The threshold ROM 35 stores a threshold table containing thresholds for maximums to be detected among 5x5 and 5x15 pixels, and the threshold table provides a slice level SV in response to the outputs of the first and second maximum detectors 32 and 33.

The slice level thus obtained is compared with the gray levels of each pixel in the original data. If the gray level of a given pixel is greater than the slice level, the pixel is determined to be a black pixel, and if it is smaller than the slice level, it is determined to be a white pixel.

Since the conventional binarization system obtains a slice level as mentioned above, the system hardly recognizes characters recorded on an original if the original involves a wide range of gray levels. In this case, the system causes deformation at a dark part of the original and blurring at a pale part of the original.

The prior art is vulnerable to noise to easily cause black dots in an area where no characters are recorded. The prior art is ineffective for characters that are out of predetermined size ranges. In addition, the prior art requires a large memory.

An embodiment of the present invention may provide a binarization system for an image scanner, which correctly reads an original involving a wide range of gray levels without causing unwanted black dots and is capable of reading characters that are out of predetermined size ranges.

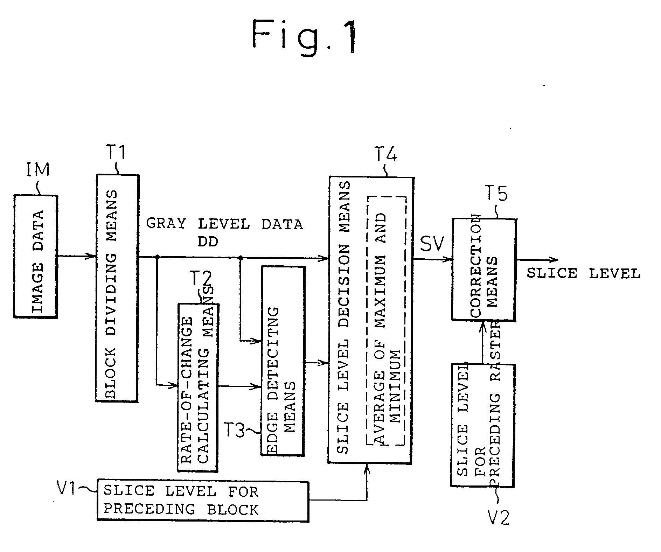

Figure **1** is a schematic view showing a binarization system according to the present invention. This system compares the gray levels of read image data with a slice level and converts the read image data into binary data. Namely, the system divides the read image data into unit blocks, finds rates of changes in gray levels in each of the blocks, detects edges in the read image data, determines a slice level for each of the blocks, and provide binary data for the image data according to the slice level.

When image data in a given block have a narrow range of gray levels, the binarization system employs a slice level for the preceding block for the given block. The binarization system finds the average of maximum and minimum gray levels of edges, to determine a slice level. The slice level is corrected according to a slice level for a corresponding block in the preceding raster.

In this way, the binarization system according to the present invention divides read image data into unit blocks, detects edges according to rates of changes in gray levels in each of the blocks, and determines a slice level for each of the blocks according to the gray levels of the edges. The binarization system determines an optimum slice level for each of the blocks even if the read image involves a wide or narrow range of gray levels. The size of each block to determine a slice level may be changed according to character sizes, to read characters that are out of predetermined size ranges.

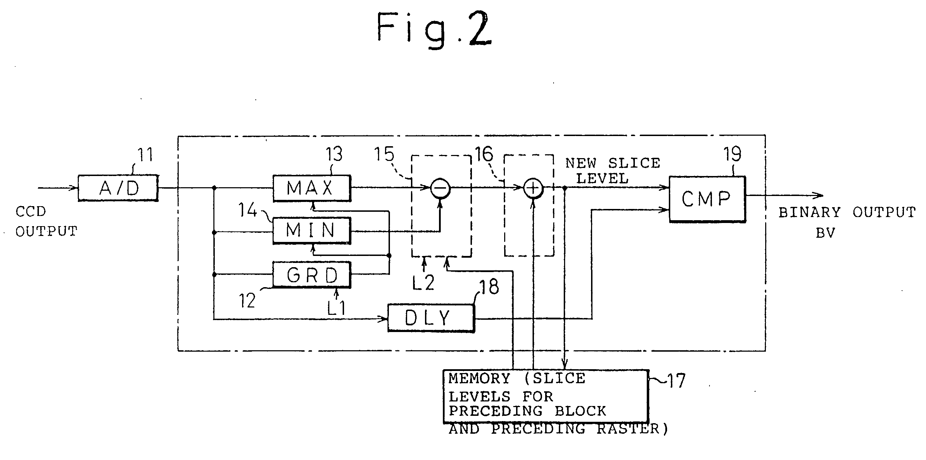

Figure **2** is a schematic view showing an embodiment of the present invention. Numeral 11 is an analog-to-digital converter, 12 is a gradient filtering unit GRD, 13 is a maximum decision unit MAX, 14 is a minimum decision unit MIN, 15 is a slice level decision unit, 16 is a weighted mean calculator, 17 is a memory, 18 is a delay circuit DLY, and 19 is a comparator CMP.

The analog-to-digital converter 11 converts the gray levels of pixels read by, for example, CCD sensors into digital signals. These digital signals are supplied to the gradient filtering unit 12, maximum decision unit 13, and minimum decision unit 14.

The gradient filtering unit 12 finds rates of changes in the gray levels of the pixels and provides an output whenever a rate of change exceeds a threshold L1.

The maximum decision unit 13 finds, in each of the blocks, a maximum among the gray levels for which the gradient filtering unit 12 has provided outputs. The minimum decision unit 14 finds, in each of the blocks, a minimum among the gray levels for which the gradient filtering unit 12 has provided outputs.

The slice level decision unit 15 finds the average of the maximum provided by the maximum decision unit 13 and the minimum provided by the minimum decision unit 14 if a difference between the maximum and minimum is greater than a threshold L2, and sets the average as a slice level for a corresponding block. If the difference between the maximum and minimum is smaller than the threshold L2, a slice level for the preceding block is used for the block in question.

The weighted mean calculator 16 calculates the weighted mean of the slice level determined by the slice level decision unit 15 and a slice level for a corresponding block in the preceding raster. The memory 17 stores the slice level provided by the weighted mean calculator 16, for the next raster.

The comparator 19 compares the slice level provided by the weighted mean calculator 16 with the digital gray level of each pixel provided through the delay circuit 18, to determine whether the pixel is black or white.

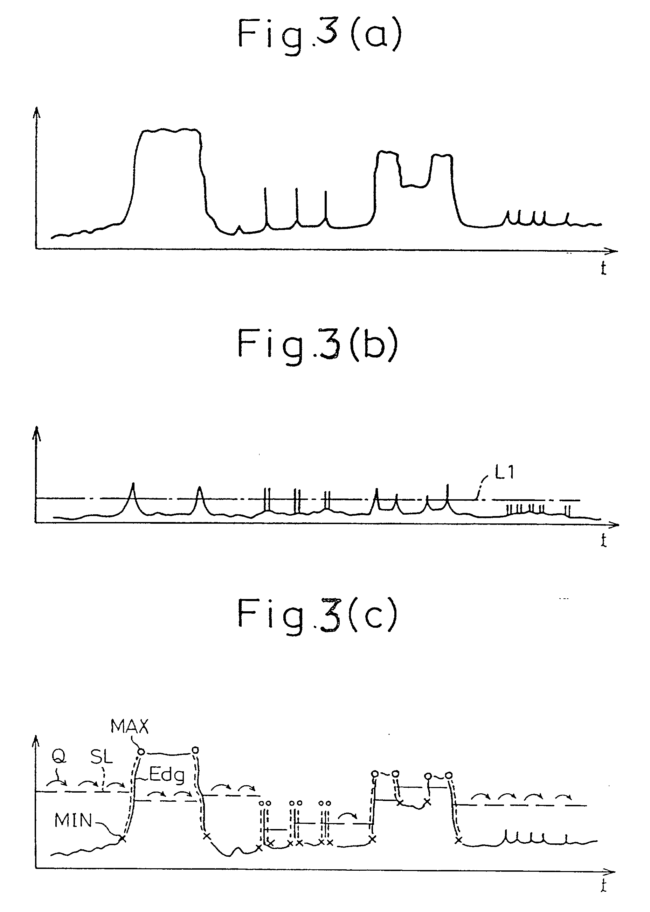

Figures **3** (a), **3**(b), and **3** (c) are timing charts showing data according to the embodiment, in which Fig. **3**(a) shows read gray levels, Fig. **3**(b) shows data processed by the gradient filtering unit, and Fig. 3(c) shows determined slice levels. L1 in Fig. 3(b) is the threshold of the gradient filtering unit 12, SL in Fig. 3(c) is a slice level determined for each block, a dotted line Edg in Fig. 3(c) is an edge found in the gray levels, MAX "o" in Fig. 3(c) is a maximum in each edge, and MIN "x" in Fig. 3(c) is a minimum in each edge. A mark "Q" will be explained later. The details of these will be explained later.

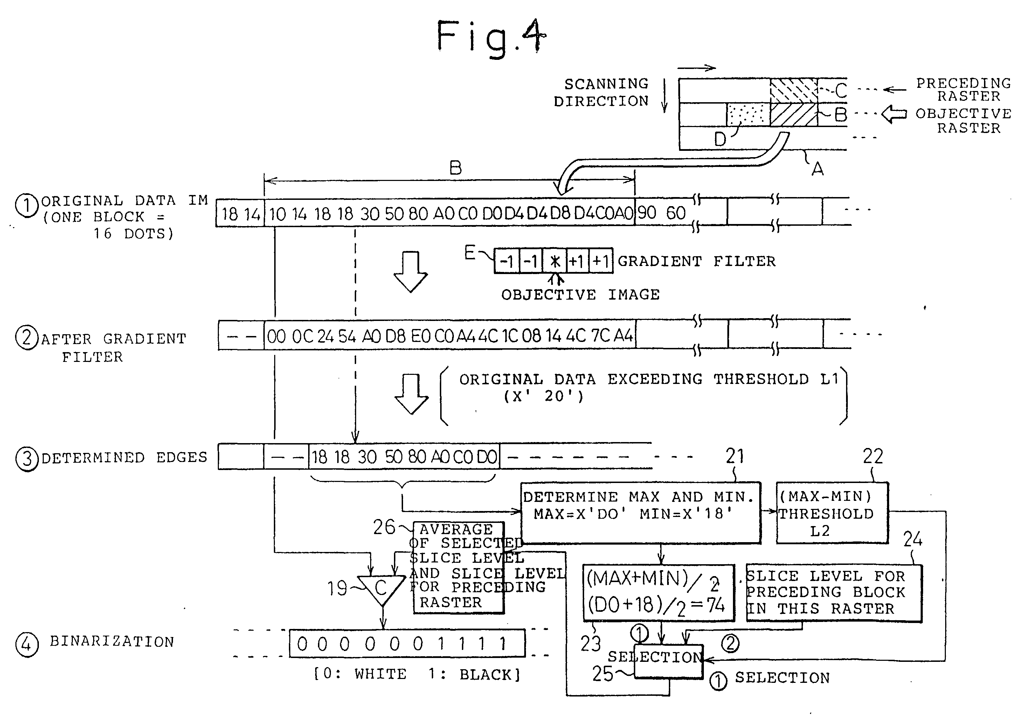

Figure **4** shows operations of the embodiment. In the figure, a reference mark A is an original to be read, B is an objective block to be read in the present raster, D is a block in front of the objective block B, C is a block corresponding to the block B but in the preceding raster, and E is a coefficient used by the gradient filtering unit 12. Operations of these parts will be explained later.

A reference mark (1) is original digital data (each block involving 16 dots) converted from analog signals read on an original, (2) is data processed by the gradient filtering unit, (3) is edge data, and (4) is binary data.

Operations of the embodiment of the present invention will be explained with reference to Figs. **2**, **3**, and **4**.

CCD sensors scan and read characters, etc., recorded on the original in the right direction in each raster, as indicated with A in Fig. **4**. The analog-to-digital converter 11 (Fig.**2**) converts the gray levels (Fig. **3**(a)) of pixels read by the CCD sensors into digital signals, which are supplied to the gradient filtering unit 12, maximum decision unit 13, and minimum decision unit 14 (Fig.**2** ).

In Fig. **4**, the reference mark (1) is the gray levels (expressed in hexadecimal numerals) read in the block B. The gradient filtering unit 12 (Fig.2) finds rates of changes in the original digital data IM (1). The rates of changes are each compared with the threshold L1.

Namely, the gray levels of four pixels before and after an objective pixel in the original data (1) are multiplied by coefficients E (-1 and +1), respectively, as shown in Fig. **4**. The results are added to one another, and the absolute value of the sum is provided as a rate of change in the gray level of the objective pixel as shown in Fig. 3(b) and (2) in Fig.**4**.

It is determined whether or not the rate of change (Fig. 3(b) and (2) in Fig.**4** ) is greater than the threshold L1. If it is greater, the objective pixel is determined to be related to the edge Edg. According to the original data (1) of Fig.4 corresponding to the pixel, edge data is obtained as shown in (3) in Fig.**4** .

When any piece of data (2) processed by the gradient filtering unit is greater than a threshold of, for example, X'20', corresponding data in the original data (1) is set as edge data. Here, X'20' indicates a hexadecimal numeral of 20. Hereinafter, a hexadecimal numeral is expressed as, for example, X'20'.

The maximum decision unit 13 and minimum decision unit 14 of Fig. **2** determine a maximum MAX and a minimum MIN among the edge data.

In the example of Fig.**4**, a process section 21 determines MAX = X'D0' and MIN = X'18' according to the edge data (3).

After the maximum MAX and minimum MIN are determined, the slice level decision unit 15 of Fig.**2** finds a difference between the maximum MAX and minimum MIN.

If the difference is greater than the threshold L2, the average of the maximum MAX and minimum MIN is calculated, and the average is set as a slice level for the objective block. If the difference is smaller than the threshold, a slice level for the preceding block (the block D in Fig. **4**) is selected as a slice level for the objective block (refer to the slice level SL in Fig. 3(c)).

In Fig. **3**(c), an arrow mark Q indicates that the slice level SL of a block is used for the next block.

In the example of Fig.**4** , a process section 22 finds a difference between the maximum MAX and the minimum MIN and determines whether or not the difference is greater than the threshold L2. If the difference is greater than the threshold, a selection section 25 calculates the average (X'74') of the maximum MAX (X'D0') and the minimum MIN (X'18') and sets the average as a slice level.

If the process section 22 determines that the difference between the maximum MAX and minimum MIN is smaller than the threshold L2, the selection section 25 selects a slice level (24) for the preceding block D in the same raster, for the objective block.

The weighted mean calculator 16 of Fig. **2** calculates the weighted mean of the determined slice level and a slice level for the corresponding block C in Fig. **4** in the preceding raster read out of the memory 17, to determine a final slice level. The comparator 19 of Fig. **2** compares the slice level provided by the weighted mean calculator 16 with the original data provided through the delay circuit 18, to determine whether each piece of the original data is black or white.

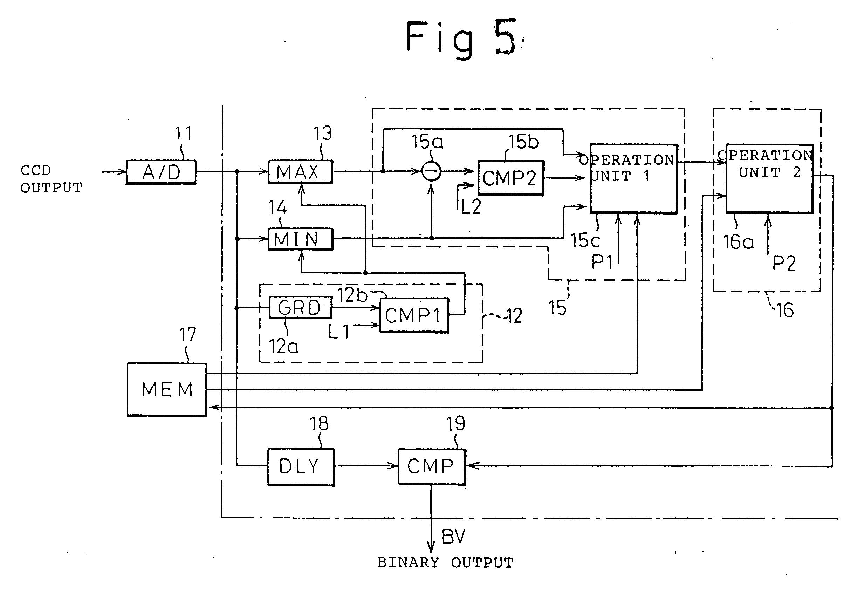

Figure **5** is a schematic view showing an embodiment of the present invention. In the figure, the same parts as those of Fig. **2** are represented with like reference marks. Numeral 11 is an analog-to-digital converter, 12 is a gradient filtering unit, 12a is a gradient filter, 12b is a first comparator, 13 is a maximum decision unit, 14 is a minimum decision unit, 15 is a slice level decision unit, 15a is a subtracter, 15b is a second comparator, 15c is a first operation unit, 16 is a weighted mean calculator, 16a is a second operation unit, 17 is a memory, 18 is a delay circuit, and 19 is a third comparator.

Similar to Fig. 2, CCD sensors read data, which are converted by the analog-to-digital converter 11 into digital signals. The digital signals are supplied to the gradient filtering unit 12, maximum decision unit 13, and minimum decision unit 14.

The gradient filtering unit 12 includes the gradient filter 12a and first comparator 12b. The gradient filter 12a finds a rate of change in an output of the analog-to-digital converter 11. The first comparator 12b compares an output of the gradient filter 12a with the threshold L1, and a result of the comparison is supplied to the maximum decision unit 13 and minimum decision unit 14.

Among gray levels in a given block provided by the analog-to-digital converter 11, those that have caused the gradient filtering unit 12 to generate outputs are searched by the maximum decision unit 13 and minimum decision unit 14, to find a maximum and a minimum, which are provided to the slice level decision unit 15.

The slice level decision unit 15 includes the subtracter 15a, second comparator 15b, and first operation unit 15c. The subtracter 15a calculates a difference between the outputs of the maximum decision unit 13 and the minimum decision unit 14. The comparator 15b compares the difference with the threshold L2 and provides a result of the comparison to the first operation unit 15c.

When the difference is smaller than the threshold L2, the first operation unit 15c provides a slice level for the preceding block in the same raster read out of the memory 17 as a slice level output, and when the difference is greater than the threshold L2, provides the average of the outputs of the maximum decision unit 13 and minimum decision unit 14 as the slice level output. When calculating the average of the outputs of the maximum and minimum decision units 13 and 14, the first operation unit 15c calculates a weighted mean thereof with a parameter P1.

The weighted mean calculator 16 has the second operation unit 16a. The second operation unit 16a calculates the weighted mean of the slice level provided by the first operation unit 15c and a slice level for a corresponding block in the preceding raster read out of the memory 17 and provides the third comparator 19 with the weighted mean as a slice level for the objective block. When calculating the weighted mean, the second operation unit 16a employs a parameter P2. Similar to the example of Fig. 2, the comparator 19 compares the slice level provided by the weighted mean calculator 16 with the original data provided through the delay circuit 18, to determine whether the data is white or black.

Although the above embodiment employs the linear gradient filter for detecting edges, this does not limit the binarization system according to the present invention. Other filters such as two-dimensional gradient filters, one- or two-dimensional Laplacian filters, or two-dimensional Sobel filters are employable to obtain rates of changes in gray levels.

When a difference between a maximum and a minimum at an edge is small, a slice level for the preceding' block in the same raster is used for an objective block. This does not limit the present invention. For example, a slice level for another block is employable when the difference is small.

The above embodiment determines a slice level according to the average of a maximum and a minimum among gray levels related to a detected edge. This does not limit the present invention. The slice level may be determined according to the average of all the gray levels related to the detected edge. In any case, a slice level is determined according to gray levels related to a detected edge.

The above embodiment employs a weighted mean calculator for calculating a weighted mean with use of a slice level for a corresponding block in the preceding raster and determines a final slice level. The weighted mean calculator is not always required. In practice, it will cause no problem if a slice level is obtained without the weighted mean calculator.

As explained above, a binarization system according to the present invention divides read gray levels into blocks, finds edges in the gray levels according to rates of changes in the gray levels, and determines a slice level according to the gray levels related to the edges. The binarization system correctly reads an original involving a wide range of gray levels without causing unwanted black dots. This system is capable of reading characters that are out of predetermined sizes. The weighted mean calculator for calculating a weighted mean with use of a slice level for a corresponding block in the preceding raster provides an optimum slice level.

## Claims

1. A binarization system for an image scanner which scans an original for reading characters and images recorded on the original (7), said binarization system comparing the gray levels of the read data with a predetermined slice level to provide binary data, and comprising:
block defining means (T1) for providing the gray levels (DD) of a plurality of pixels in a block; difference calculation means (T2) for calculating differences between gray levels (DD) of pixels in each block;
edge detecting means (T3) for detecting edges in the gray levels (DD) according to data provided by the difference calculation means (T2);
slice level decision means (T4) for determining a binarization slice level (SV) for the read image data of each of the blocks, according to the gray levels (DD) from the dividing means (T1) and the edges detected by the edge detecting means (T3); and
correction means (T5) for correcting the slice level (SV);
**characterised in that**:
said block defining means is a dividing means for dividing the read data into predetermined unit blocks; and
said difference calculation means (T2) is a rate-of-change calculation means for calculating rates of changes in the gray levels of pixels in each block by considering each pixel in turn as an objective pixel and calculating the absolute sum of the gray levels of one or more pixels before the objective pixel multiplied by a first coefficient and of the gray levels of one or more pixels after the objective pixel multiplied by a second coefficient, said absolute sum constituting said data provided by said difference calculation means;
whereby the binarization system achieves optimum binarization and enables the image scanner to correctly read the original without causing unwanted black dots even if the original involves a wide or narrow range of gray levels, as well as reading characters that are out of predetermined size ranges.

2. The binarization system for an image scanner according to claim 1, wherein, when image data in a given block involves a narrow range of gray levels, a slice level (V1) for the preceding block divided by the dividing means (T1) is employed as a slice level for the given block.

3. The binarization system for an image scanner according to claim 1 or 2, wherein the slice level decision means (T4) determines a slice level for a given block according to the average of a maximum and minimum among the gray levels (DD) provided by the edge detection means (T3) for the given block.

4. The binarization system for an image scanner according to any preceding claim, wherein the correction means (T5) corrects the slice level determined by the slice level decision means (T4) by calculating a weighted sum of the determined slice level and a slice level (V2) for a corresponding block in the preceding raster.

## Patentansprüche

1. Digitalisierungssystem für einen Bildabtaster, der ein Original abtastet zum Lesen von auf dem Original (7) aufgezeichneten Zeichen und Bildern, wobei das Digitalisierungssystem die Graupegel der gelesenen Daten mit einem vorbestimmten Scheibenpegel bzw. Slice-Level vergleicht zum Bereitstellen von Binärdaten und umfasst:
ein Blockdefinitionsmittel (T1) zum Bereitstellen der Graupegel (DD) für eine Vielzahl von Bildpunkten in einem Block;
ein Differenzberechnungsmittel (T2) zum Berechnen von Unterschieden zwischen Graupegeln (DD) von Bildpunkten in jedem Block;
ein Randerfassungsmittel (T3) zum Erfassen von Rändern in den Graupegeln (DD) entsprechend den von dem Differenzberechnungsmittel (T2) bereitgestellten Daten;
ein Scheibenpegelentscheidungsmittel (T4) zum Bestimmen eines Digitalisierungsscheibenpegels (SV) für die gelesenen Daten jedes der Blöcke entsprechend den Graupegeln (DD) von dem Aufteilungsmittel (T1) und den Rändern, die von dem Randerfassungsmittel (T3) erfasst worden sind; und
ein Korrekturmittel (T5) zum Korrigieren des Scheibenpegels (SV) ;
**dadurch gekennzeichnet, dass**:
das Blockdefinitionsmittel ein Aufteilungsmittel ist zum Aufteilen der gelesenen Daten in vorbestimmte Einheitsblöcke; und
das Differenzberechnungsmittel (T2) ein Änderungsratenberechnungsmittel ist zum Berechnen von Änderungsraten in den Graupegeln von Bildpunkten in jedem Block durch Betrachten jedes Bildpunktes der Reihe nach als einen Zielbildpunkt und Berechnen der absoluten summe der Graupegel eines oder mehrerer Bildpunkte vor dem Zielbildpunkt multipliziert mit einem ersten Koeffizienten und der Graupegel eines oder mehrerer Bildpunkte nach dem Zielbildpunkt multipliziert mit einem zweiten Koeffizienten, wobei die absolute Summe die Daten bildet, die von dem Differenzberechnungsmittel bereitgestellt werden;
wobei das Digitalisierungssystem eine optimale Digitalisierung erreicht und den Bildabtaster befähigt, korrekt das Original zu lesen, ohne unerwünschte schwarze Punkte zu bewirken, selbst wenn das original einen weiten oder engen Bereich von Graupegeln einschließt sowie das Lesen von Zeichen, die außerhalb eines vorbestimmten Größenbereiches liegen.

2. Digitalisierungssystem für einen Bildabtater nach Anspruch 1, wobei, wenn Bilddaten in einem gegebenen Block einen engen Bereich von Graupegeln einschließen, ein Scheibenpegel (V1) für den vorangegangenen Block, aufgeteilt von dem Aufteilungsmittel (T1) verwendet wird als Scheibenpegel für den gegebenen Block.

3. Digitalisierungssystem für einen Bildabtaster nach Anspruch 1 oder 2, wobei das Scheibenpegelentscheidungsmittel (T4) einen Scheibenpegel für einen gegebenen Block bestimmt entsprechend dem Durchschnitt eines Maximums und eines Minimums unter den Graupegeln (DD), die von dem Kantenerfassungsmittel (T3) bereitgestellt werden, für den gegebenen Block.

4. Digitalisierungssystem für einen Bildabtaster gemäß irgendeinem der vorhergehenden Ansprüche, wobei das Korrekturmittel (T5) den Scheibenpegel korrigiert, der von dem Schiebenpegelentscheidungsmittel (T4) bestimmt worden ist, durch Berechnen einer gewichteten Summe eines bestimmten Scheibenpegels und eines Scheibenpegels (V2) für einen korrespondierenden Block in dem vorhergehenden Raster.

## Revendications

1. Système de binarisation pour scanneur d'image qui analyse par balayage un original afin de lire des caractères et des images enregistrés sur l'original (7), ledit système de binarisation comparant les niveaux de gris des données lues avec un seuil de comparaison prédéterminé afin de produire des données binaires, et comprenant :
un moyen (T1) de définition de bloc servant à produire les niveaux de gris (DD) d'une pluralité de pixels d'un bloc ;
un moyen (T2) de calcul de différence servant à calculer les différences entre niveaux de gris (DD) de pixels de chaque bloc ;
un moyen (T3) de détection de bord servant à détecter des bords dans les niveaux de gris (DD) en fonction des données fournies par le moyen de calcul de différence (T2) ;
un moyen (T4) de décision quant au seuil de comparaison servant à déterminer un niveau de comparaison de binarisation (SV) pour les données d'image lues de chacun des blocs, en fonction des niveaux de gris (DD) venant du moyen de division (T1) et des bords détectés par le moyen de détection de bord (T3) ; et
un moyen de correction (T5) servant à corriger le seuil de comparaison (SV) ;
**caractérisé en ce que** :
ledit moyen de définition de bloc est un moyen de division servant à diviser les données lues en des blocs unités prédéterminés ; et
ledit moyen de calcul de différence (T2) est un moyen de calcul de taux de variation servant à calculer les taux de variation des niveaux de gris des pixels de chaque bloc en considérant chaque pixel après l'autre comme un pixel objectif et en calculant la somme absolue des niveaux de gris d'un ou plusieurs pixels avant le pixel objectif multiplié par un premier coefficient et des niveaux de gris d'un ou plusieurs pixel après le pixel objectif multiplié par un deuxième coefficient, la somme absolue constituant lesdites données fournies par ledit moyen de calcul de différences ;
si bien que le système de binarisation donne une binarisation optimale et permet au scanneur d'image de lire correctement l'original sans provoquer de points noirs non voulus même si l'original implique un intervalle large ou étroit de niveaux de gris, ainsi que lire des caractères qui sont en dehors d'intervalles de taille prédéterminée.

2. Système de binarisation pour scanneur d'image selon la revendication 1, où, lorsque des données d'image d'un bloc donné implique un intervalle étroit de niveaux de gris, un seuil de comparaison (V1) relatif au bloc précédent divisé par le moyen de division (T1) est employé au titre du seuil de comparaison relatif au bloc donné.

3. Système de binarisation pour scanneur d'image selon la revendication 1 ou 2, où le moyen (T4) de prise de décision quant au seuil de comparaison détermine un seuil de comparaison relatif à un bloc donné en fonction de la moyenne d'un maximum et d'un minimum parmi les niveaux de gris (DD) que produit le moyen de détection de bord (T3) pour le bloc donné.

4. Système de binarisation pour scanneur d'image selon l'une quelconque des revendications précédentes, où le moyen de correction (T5) corrige le seuil de comparaison déterminé par le moyen (T4) de prise de décision quant au seuil de comparaison en calculant la somme pondérée du seuil de comparaison déterminé et d'un niveau de seuil (V2) relatif à un bloc correspondant de l'image tramée précédente.
